(19) Europäisches Patentamt
European Patent Office
Office européen des brevets

(11) Veröffentlichungsnummer: **0 056 160**
**B1**

(12) **EUROPÄISCHE PATENTSCHRIFT**

(45) Veröffentlichungstag der Patentschrift: **13.03.85**

(51) Int. Cl.⁴: **C 09 B 67/42**, D 06 L 3/12, C 09 K 3/22

(21) Anmeldenummer: **81110814.1**

(22) Anmeldetag: **29.12.81**

(54) **Staubarme Farbstoffpräparationen.**

(30) Priorität: **08.01.81 DE 3100353**

(43) Veröffentlichungstag der Anmeldung: **21.07.82 Patentblatt 82/29**

(45) Bekanntmachung des Hinweises auf die Patenterteilung: **13.03.85 Patentblatt 85/11**

(84) Benannte Vertragsstaaten: **CH DE FR GB LI**

(56) Entgegenhaltungen:
**EP-A- 0 023 638**
**DE-A- 2 247 171**
**DE-A- 2 523 096**
**FR-A- 2 373 592**
**Die Akte enthält technische Angaben, die nach dem Eingang der Anmeldung eingereicht wurden und die nicht in dieser Patentschrift enthalten sind.**

(73) Patentinhaber: **BAYER AG**
**Konzernverwaltung RP Patentabteilung**
**D-5090 Leverkusen 1 Bayerwerk (DE)**

(72) Erfinder: **Kaspar, Vaclav, Dipl. Ing.**
**Morgengraben 2**
**D-5000 Köln 80 (DE)**
Erfinder: **Walz, Klaus, Dr.**
**Domblick 4**
**D-5090 Leverkusen 31 (DE)**
Erfinder: **Mölls, Hans-Heinz, Dr.**
**Max Beckmann Strasse 29**
**D-5090 Leverkusen (DE)**
Erfinder: **Hörnle, Reinhold, Dr.**
**Hufelandstrasse 42**
**D-5000 Köln 80 (DE)**
Erfinder: **Skerhut, Rainer, Dipl. Ing.**
**Gronauerstrasse 34**
**D-5000 Köln 80 (DE)**

**EP 0 056 160 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Gegenstand der Erfindung sind feste Einstellungen von Farbstoffen sowie optischen Aufhellern, die eine Mischung aus

a) 70-90 Gew.% eines Mineralöls,
b) 0,5-10 Gew.% eines Amids der Formel

$$R-\underset{\underset{O}{\parallel}}{C}-\overset{R_1}{\overset{|}{N}}-R_2-\overset{R_1}{\overset{|}{N}}-\underset{\underset{O}{\parallel}}{C}-R \qquad (I)$$

in der
R für $C_{10}$-$C_{22}$-Alkyl oder -Alkenyl,
$R_1$ für H, $C_1$-$C_{1-4}$-Alkyl oder beide $R_1$ zusammen für eine 1,2-Ethylenbrücke und
$R_2$ für $-\underset{\underset{R_3}{|}}{CH}-$, $-CH_2-O-CH_2-$ oder $C_2$-$C_6$-Alkylen stehen,

wobei $R_3$ für H, $C_1$-$C_6$-Alkyl oder -Phenyl steht,
c) 0,5-15 Gew.% eines nichtionischen Tensids und
d) 0-8 Gew.% eines kationischen oder anionischen Tensids enthalten.

Vorzugsweise enthalten die Einstellungen 0,2-15 Gew.% dieser Mischung.

Als Mineralöle kommen insbesondere bei Raumtemperatur flüssige aliphatische, alicyclische und/oder aromatische Kohlenwasserstoffe in Betracht, deren Siedepunkt insbesondere über 150 °C liegt. Vorzugsweise kommen aliphatische Kohlenwasserstoffe, die gegebenenfalls unterschiedliche Mengen an cycloaliphatischen und/oder aromatischen Kohlenwasserstoffen enthalten können, zum Einsatz. Als Beispiele hierfür seien die aliphatischen Kohlenwasserstoffe Dodecan, Tetradecan, Hexadecan, Octadecan, Eicosan oder deren Mischungen, synthetische Kohlenwasserstoffe, wie sie beispielsweise bei der Fischer-Tropsch-Synthese erhalten werden, oder technische Mineralöle aus unterschiedlich raffinierten Erdölen, wie sie beispielsweise als Paraffinöle, Spindelöle oder Weißöle im Handel sind, genannt.

Als Amide der Formel (I) seien beispielsweise genannt : Methylen-bis-laurinsäureamid, Methylen-bismyristinsäureamid, Methyl-bis-palmitinsäureamid, Methylen-bis-stearinsäureamid, Methylen-bis-eikosansäureamid, Methylen-bis-behensäureamid, Methylen-bis-ölsäureamid, 1,2-Ethylen-bis-laurinsäureamid, 1,2-Ethylen-bis-palmitinsäureamid, 1,2-Ethylen-bis-stearinsäureamid, 1,4-Butylen-bis-stearinsäureamid, Isobutylen-bis-stearinsäureamid, Benzyliden-bis-stearinsäureamid, Methylen-bis-linolsäureamid, Bispalmitoylaminomethyl-ether, Bis-stearoylaminomethylether, 1,3-Bis-lauroylimidazolidin oder 1,3-Bis-stearyl-imidazolidin.

Bevorzugte Zusammensetzungen enthalten Methylen-bis-stearinsäureamid, Methylen-bis-eikosansäureamid oder Methylen-bis-behensäureamid, insbesondere jedoch Methylen-bis-stearinsäureamid. Die Verbindungen sind größtenteils bekannt und lassen sich nach bekannten Verfahren, wie sie beispielsweise in der GB-PS 1 410 722 oder in der US-PS 2 554 846 beschrieben sind, herstellen.

Geeignete nichtionische Tenside sind Umsetzungsprodukte von 8 bis 20 Kohlenstoffatome enthaltenden, gegebenenfalls ungesättigten Fettsäuren, Fettsäureamiden, Fettalkoholen oder Fettaminen oder $C_6$-$C_{12}$-Alkylphenolen mit Ethylenoxid und/oder Propylenoxid sowie Derivate solcher Verbindungen, wie sie beispielsweise durch Veresterung der endständigen Hydroxylgruppen mit Carbonsäuren, wie Essigsäure, Laurinsäure oder Benzoesäure, oder durch Veretherung mit z. B. Isobutylen oder Alkylchloriden erhalten werden. Weitere geeignete nichtionische Tenside sind auch oberflächenaktive Derivate von mehrwertigen Alkoholen, beispielsweise Fettsäureester von Säuren mit 10-22 Kohlenstoffatomen und Pentiten, Hexiten, Pentosen, Hexosen oder Polysacchariden sowie deren Oxethylierungsprodukte. Bevorzugte nichtionische Tenside sind Umsetzungsprodukte von 12-18 Kohlenstoffatome enthaltenden Fettsäuren oder Fettsäureamiden mit 3-10 Mol Ethylenoxid, von 8-18 Kohlenstoffatome enthaltenden Fettalkoholen oder von $C_6$-$C_9$-Alkylphenolen mit 3-10 Mol Ethylenoxid, oder Ester solcher Verbindungen mit 12-18 Kohlenstoffatome enthaltenden Fettsäuren.

Als weitere Tenside enthalten die Zusammensetzungen 0-8 %, vorzugsweise 0,5-3 % einer kationaktiven oder anionaktiven Verbindung. Als kationaktive Verbindungen seien beispielsweise genannt :

Salze von Aminen, die neben mindestens einem basischen Stickstoffatom mindestens einen 10-20 Kohlenstoffatome enthaltenden Alkyl- oder Alkenylrest enthalten, hiervon abgeleitete quaternäre Ammoniumverbindungen, heterocyclische Verbindungen, wie Alkylpyridiniumsalze, Imidazoliniumverbindungen, sowie Aminoxide oder Sulfoniumverbindungen. Vorzugsweise enthalten die Zusammensetzungen als kationische Tenside solche der Formel

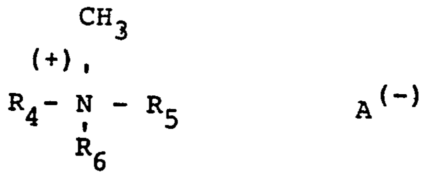

(II)

in der

$R_4$ für einen $C_{12}$-$C_{20}$-Alkyl- oder -Alkenylrest,

$R_5$ für die Hydroxyethyl- oder Hydroxypropylgruppe,

$R_6$ für $R_5$ oder Methyl und

$A^{(-)}$ für ein Anion, insbesondere für $Cl^{(-)}$, $Br^{(-)}$ oder $CH_3SO_4^{(-)}$ stehen.

Geeignete anionische Tenside sind beispielsweise 12-22 Kohlenstoffatome enthaltende Alkansulfonate, Alkylbenzolsulfonate, Alkylnaphthalinsulfonate, Alkylsulfate, Ligninsulfate sowie Salze von Fettsäuren.

Als geeignete Farbstoffe kommen z. B. folgende Farbstoffe in Frage: Anionische Farbstoffe, kationische Farbstoffe, Dispersionsfarbstoffe, Küpenfarbstoffe, Metallkomplexfarbstoffe wie 1 : 1- und 1 : 2- Kupfer, Chrom- oder Kobaltfarbstoffe, reaktive Farbstoffe, Chromierungsfarbstoffe, anorganische und organische Pigmente und Direktfarbstoffe sowie optische Aufheller.

Bevorzugte feste Präparationen enthalten 0,4-5 % einer Zusammensetzung aus

a) 80-90 % eines Mineralöls mit einem Siedepunkt von mindestens 270 °C,

b) 2-6 % eines Amids der Formel (I), insbesondere Methylen-bis-stearinsäureamid,

c) 4-10 % eines nichtionischen Tensids, insbesondere eines Umsetzungsproduktes eines 8-18 Kohlenstoffatome enthaltenden aliphatischen Alkohols, Alkylphenols, Fettsäureamids oder einer Fettsäure mit 3-10 Mol Ethylenoxid, und

d) 0-3 % eines kationischen Tensids, insbesondere einer Verbindung der Formel

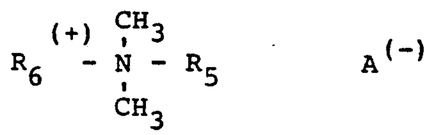

in der

$R_5$ und $A^{(-)}$ die obengenannte Bedeutung besitzen, und

$R_6$ für einen $C_{16}$-$C_{20}$-Alkyl- oder -Alkenylrest steht.

Als weitere Zusätze können die erfindungsgemäßen festen Präparationen übliche Stellmittel wie Dextrin, Zucker, anorganische Salze, wie Natriumsulfat, Natriumchlorid oder Trinatriumphosphat, sowie Dispergiermittel, Netzmittel oder Emulgatoren enthalten.

Die erfindungsgemäßen festen Einstellungen werden nach an sich bekannten Verfahren durch Zugabe einer Mischung der Komponenten a)-d) zu den Farbstoffen bzw. optischen Aufhellern erhalten.

Der Zusatz kann nach verschiedenen Methoden erfolgen, z. B. durch Vermischen des bereits getrockneten und eingestellten Produktes mit der oben genannten Zusammensetzung in einem Mischer oder vorteilhafterweise durch die gemeinsame Sprühtrocknung der Farbstofflösung bzw. -dispersion mit der oben genannten Zusammensetzung, die als wäßrige Emulsion kontinuierlich oder diskontinuierlich zudosiert werden kann.

Die so erhaltenen erfindungsgemäßen festen Präparationen zeichnen sich gegenüber bisher üblichen Einstellungen, wie sie z. B. in DE-OS 2 656 407 beschrieben sind, dadurch aus, daß sie neben dem verbesserten Staubverhalten bei der Handhabung eine geringere Schaumneigung der Farbstoffe oder optischen Aufheller bei der Anwendung aus wäßrigen Flotten zeigen.

Aus der DE-A-25 23 096 sind staubfreie oder staubarme Farbstoffpulver bekannt, die ein Mineralöl und einen nichtionischen Polyether enthalten. Sie besitzen eine größere Schaumneigung als die Farbstoffeinstellungen der vorliegenden Erfindung.

Die gemeinsame Verwendung eines Mineralöls und eines Amids der Formel (I) der vorliegenden Erfindung und gegebenenfalls eines nichtionischen Tensids oder eines quartären Salzes in Ammoniumnitrat-Einstellungen zur Erzielung verbesserter Antikleb- und Antizerstäubungseigenschaften ist aus der DE-A-22 47 171 bekannt.

Die Bestimmung des Staubverhaltens wurde in einem Staubwertmeßgerät der Fa. Cassella durchgeführt.

Als Maß für den Staubwert gilt die Schwächung eines durch einen Auffangbehälter gehenden Lichtstrahls, die durch das Aufwirbeln von Farbstoffstaub in diesem Behälter hervorgerufen wird und mit Hilfe einer Photozelle gemessen wird. Der Staub wird durch das Herabfallen von Farbstoff aus einer durch die Apparatur vorgegebenen Höhe erzeugt. Die Lichtschwächung wird sofort nach dem Aufprall des Farbstoffes auf dem Boden des Behälters und 30 sec. später gemessen. Beide Werte werden addiert. Die

Staubwertmessung erfolgt mit 30 g als Einwage. Die Fallhöhe beträgt 750 mm. Die Sollwerte für einen gut entstaubten Farbstoff betragen üblicherweise bei

a) bunten Farbstoffen $\leq 10$
b) schwarzen Farbstoffen $\leq 5$.

(0 bedeutet keine Schwächung ; 100 bedeutet vollständige Schwächung).

Die Bestimmung des Schaumverhaltens wurde im Schaumschlaggerät der Fa. E. Haage, Mülheim/Ruhr durchgeführt nach Schlachter Dierkes. Die Messung des Schaumes erfolgt mit 200 ml einer Lösung, die 0,4 g/l der zu prüfenden Substanz enthält. Gemessen wird nach 100 Schlägen in der Minute. Abgelesen wird sofort, nach 1 Minute und nach 5 Minuten (in $cm^3$).

Beispiel 1

Zu einer ca. 30 %igen Dispersion des mit üblichen Streckmitteln eingestellten 1 : 2-Chromkomplexes des Farbstoffs der Formel

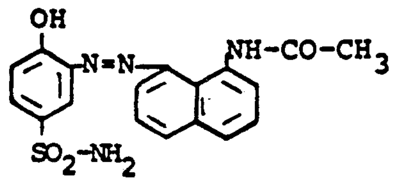

werden vor der Sprühtrocknung 2 Gew.Tl. der nachfolgend beschriebenen Zusammensetzung — bezogen auf Trockensubstanz — als wäßrige Emulsion kontinuierlich zudosiert.

Die Sprühtrocknung wird in einem Sprühtrockner bei 180 °C Eingangs- und 80 °C Ausgangstemperatur durchgeführt. Als Zerstäubungsorgan wird eine Einstoffdüse verwendet. Man erhält ein staubarmes und schaumarmes Farbstoffgranulat mit guter Kalt- sowie Heißlöslichkeit. Die verwendete Zusammensetzung wurde folgendermaßen hergestellt :

In 405 Teilen eines Mineralöls (Dichte bei 15 °C : 0,900 ; Viskosität bei 20 °C : $0{,}132 \cdot 10^{-4}$ $m^2/s$, Siedeintervall 282-332 °C) werden bei 70-80 °C 11,2 Teile Stearyl-dimethyl-hydroxyethyl-ammoniumchlorid und 42 Teile eines Umsetzungsproduktes von einem $C_{12}$-$C_{14}$-Fettalkohols mit 3 Mol Ethylenoxid gelöst. Die erhaltene Lösung wird auf 20-30 °C abgekühlt und bei dieser Temperatur unter gutem Rühren langsam mit einer auf 120 °C erhitzten Lösung von 21 Teilen Methylen-bis-stearin-säureamid in 400 Teilen Mineralöl versetzt. Es werden ca. 890 Teile einer öligen Flüssigkeit erhalten, aus der sich durch einfaches Eingießen in Wasser und Umrühren eine stabile Emulsion herstellen läßt. Dichte 0,9 $kg/m^3$ ; Durchlaufzeit im Fordbecher (4 mm-Düse) : 18 Sek.

Beispiel 2

Zu einer ca. 25 %igen Dispersion des mit üblichen Dispergiermitteln formierten Dispersionsfarbstoffes der Formel

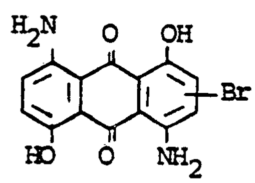

werden kurz vor der Sprühtrocknung 0,5 Gew.Tl. der nachfolgend beschriebenen Zusammensetzung als wäßrige Emulsion zugegeben. Die anschließende Sprühtrocknung wird in einem Sprühtrockner bei 170 °C Eingangs- und 75 °C Ausgangstemperatur durchgeführt. Man erhält ein staubarmes und schaumarmes Farbstoffgranulat, das sich in Wasser gut dispergieren läßt. Die verwendete Zusammensetzung wurde auf folgende Weise hergestellt :

42 Teile Methylen-bis-stearinsäureamid werden bei 120 °C in 400 Teilen eines Fischer-Tropsch-Kohlenwasserstoffs mit einer mittleren Kohlenstoffzahl von 15 gelöst. Diese Lösung läßt man unter gutem Rühren langsam in eine auf 20-30 °C gekühlte Lösung einlaufen, die durch Vermischen von 42 Teilen eines Umsetzungsproduktes von techn. Laurylalkohol mit 3 Mol Ethylenoxid, von 11,2 Teilen Octadecyldimethyl-hydroxyethylammoniumchlorid und 400 Teilen desselben Kohlenwasserstoffs erhalten wurde. Es werden ca. 890 Teile eines weißen Öls erhalten.

Dichte : 0,85 $kg/m^3$ : Durchlaufzeit im Fordbecher (4 mm Düse) : 18 Sek. Das Produkt läßt sich mit Wasser zu einer stabilen Emulsion verdünnen.

Beispiel 3

Zu einer ca. 30 %igen Lösung des mit üblichen Stellmitteln eingestellten 1 : 2-Chromkomplexes des Farbstoffs der Formel

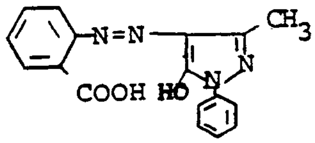

werden kurz vor der Sprühtrocknung 3,3 Gew.Tl. der nachfolgend beschriebenen Zusammensetzung — bezogen auf Trockensubstanz — als wäßrige Emulsion zugegeben. Die anschließende Sprühtrocknung wird in einem Sprühtrockner bei 200 °C Eingangs- und 95 °C Ausgangstemperatur durchgeführt. Als Zerstäubungsorgan wird eine Einstoffdüse verwendet. Man erhält ein staubarmes und schaumarmes Farbstoffgranulat mit guter Löslichkeit in Wasser. Die verwendete Zusammensetzung wurde folgendermaßen hergestellt :

In 402 Teilen des in Beispiel 1 verwendeten Mineralöls werden bei 70-80 °C 16 Teile eines Natriumalkansulfonats (mittlere Kettenlänge : $C_{21}$) und 63 Teile eines Umsetzungsproduktes von einem $C_{12}$-$C_{14}$-Fettalkohol mit 3 Mol Ethylenoxid gelöst. Die erhaltene Lösung wird auf 20-30 °C abgekühlt und bei dieser Temperatur unter gutem Rühren langsam mit einer auf 120 °C erhitzten Lösung von 20,5 Teilen Methylen-bis-stearinsäureamid in 402 Teilen Mineralöls versetzt. Es werden ca. 900 Teile einer öligen Flüssigkeit erhalten, die durch einfaches Eingießen in Wasser und Umrühren emulgiert werden kann. Dichte 0,9 $kg/m^3$ ; Durchlaufzeit im Fordbecher (4 mm Düse) : 47 sec.

Beispiel 4

Nachfolgend sind einige weitere erfindungsgemäß formulierte Farbstoffpräparationen den entsprechenden Einstellungen mit handelsüblichen Entstaubungsmitteln gegenübergestellt :

(Siehe Tabelle Seite 6 f.)

| Farbstoff | Staubwert | Schaumwert [cm²] sofort | nach 1' | nach 5' |
|---|---|---|---|---|
| 1. Farbstoff des Beispiels 3 | 21 + 3 | 500 | 300 | 0 |
| + 2 Gew. Tl. des in Beispiel 1 verwendeten Produkt | 1 + 0 | 150 | 0 | 0 |
| + 2 Gew. Tl. Handelsübliches Entstaubungsmittel | 15 + 3 | 1.150 | 950 | 750 |
| 2. CI Dispers Blue 81 (=Nr. 64515) | 77 + 48 | 400 | 0 | 0 |
| + 2 Gew. Tl. des in Beispiel 1 verwendeten Produkt | 6 + 2 | 0 | 0 | 0 |
| + 2 Gew. Tl. handelsübliches Entstaubungsmittel | 40 + 14 | 450 | 350 | 250 |
| 3. CI Acid Red 42 (=Nr. 17070) | 10 + 1 | 750 | 700 | 350 |
| + 2 Gew. Tl. des in Beispiel 1 verwendeten Produkt | 3 + 0 | 250 | 0 | 0 |
| + 2 Gew. Tl. handelsübliches Entstaubungsmittel | 5 + 1 | 300 | 250 | 100 |

(Fortsetzung)

| Farbstoff | Staubwert | Schaumwert [cm²] sofort | nach 1' | nach 5' |
|---|---|---|---|---|
| 4. Farbstoff der Formel 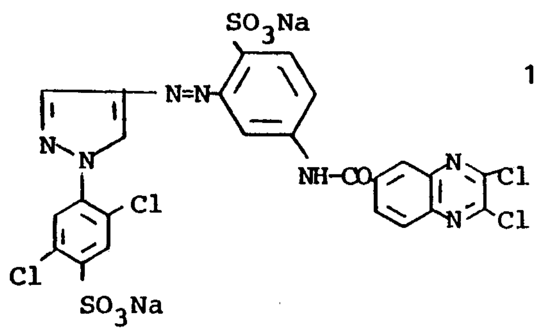 | 13 + 1 | 850 | 800 | 600 |
| + 2 Gew. Tl. des in Beispiel 1 verwendeten Produktes | 1 + 0 | 250 | 125 | 0 |
| + 2 Gew. T. handelsübliches Entstaubungsmittel | 6 + 0 | 450 | 350 | 300 |

## Ansprüche

1. Feste Präparationen von organischen Farbstoffen sowie optischen Aufhellern, dadurch gekennzeichnet, daß sie eine Mischung aus

a) 70-90 Gew.% eines Mineralöls,
b) 0,5-10 Gew.% eines Amids der Formel

$$R-\underset{\underset{O}{\|}}{C}-\overset{\overset{R_1}{|}}{N}-R_2-\overset{\overset{R_1}{|}}{N}-\underset{\underset{O}{\|}}{C}-R$$

in der
R für $C_{10}$-$C_{22}$-Alkyl oder -Alkenyl,
$R_1$ für H, $C_1$-$C_4$-Alkyl oder beide $R_1$ zusammen für eine 1,2-Ethylenbrücke und
$R_2$ für $-\underset{\underset{R_3}{|}}{C}H-$, $-CH_2-O-CH_2-$ oder $C_2$-$C_6$-Alkylen
stehen, wobei $R_3$ für H, $C_1$-$C_6$-Alkyl oder Phenyl steht,
c) 0,5-15 Gew.% eines nichtionischen Tensides und
d) 0-8 Gew.% eines kationischen oder anionischen Tensides
enthalten.

2. Präparationen nach Anspruch 1, dadurch gekennzeichnet, daß sie 0,2-15 % der Mischung enthalten.

3. Präparationen nach Anspruch 1, dadurch gekennzeichnet, daß sie 0,4 bis 5 % einer Mischung aus

a) 80-90 % eines Mineralöls mit einem Siedepunkt von mindestens 270 °C,
b) 2-6 % eines Amids des Anspruchs 1,
c) 4-10 % eines nichtionischen Tensids, insbesondere eines Umsetzungsproduktes von 8-18 Kohlenstoffatome enthaltenden aliphatischen Alkohols, Alkylphenols, Fettsäureamids oder einer Fettsäure mit 3-10 Mol Ethylenoxid, und
d) 0-3 % eines kationischen Tensids der Formel

$$R_4-\overset{\overset{CH_3}{|}}{\underset{\underset{CH_3}{|}}{N}}\overset{(+)}{-}R_5 \qquad A^{(-)}$$

in der
$R_4$ für einen $C_{12}$-$C_{20}$-Alkyl- oder -Alkenylrest,
$R_5$ für die Hydroxyethyl- oder Hydroxypropylgruppe und
$A^{(-)}$ für ein Anion, insbesondere für Cl, Br oder $CH_3SO_4$ stehen, enthalten.

4. Feste Farbstoffpräparationen nach den Ansprüchen 1-3, dadurch gekennzeichnet, daß die Komponente b) ein Methylen-bis-stearinsäureamid bedeutet.

5. Verfahren zur Herstellung von staubarmen und schaumarmen festen Farbstoffpräparationen, dadurch gekennzeichnet, daß man eine Mischung aus Farbstoff-Lösung bzw. Farbstoff-Dispersion und einer Mischung nach Ansprüchen 1 bis 4 gemeinsam sprühtrocknet.

6. Verfahren nach Anspruch 5, dadurch gekennzeichnet, daß die Mischung nach Ansprüchen 1 bis 4 der Farbstoff-Lösung bzw. Farbstoff-Dispersion vor der Sprühtrocknung kontinuierlich zugegeben wird.

7. Verfahren nach Ansprüchen 5 und 6, dadurch gekennzeichnet, daß die Mischung nach Ansprüchen 1 bis 4 als wäßrige Emulsion zugegeben wird.

8. Verfahren nach Anspruch 5 bis 7, dadurch gekennzeichnet, daß die Mischung nach Ansprüchen 1 bis 4 in Mengen von 0,2 bis 15 Gew.%, insbesondere 0,4 bis 5 Gew.% zugegeben wird.

9. Verfahren nach Ansprüchen 5 bis 8, dadurch gekennzeichnet, daß als Zerstaubungsorgan eine Einstoffdüse angewandt wird.

10. Verfahren zur Herstellung von staubarmen und schaumarmen festen Farbstoffpräparationen, dadurch gekennzeichnet, daß die Mischung nach Ansprüchen 1 bis 4 dem bereits getrockneten Farbstoff in Mengen von 0,2 bis 15 Gew.%, vorteilhafterweise 0,4 bis 5 Gew.% beigemischt wird.

**Claims**

1. Solid formulations of organic dyestuffs or of optical brighteners, characterised in that they contain a mixture of

a) 70-90 % by weight of a mineral oil,
b) 0.5-10 % by weight of an amide of the formula

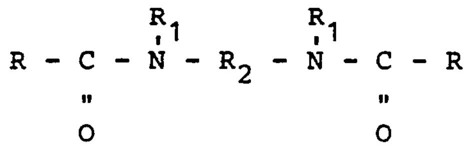

in which
R represents $C_{10}$-$C_{22}$-alkyl or -alkenyl,
$R_1$ represents H or $C_1$-$C_4$-alkyl, or the two $R_1$'s together represent a 1,2-ethylene bridge and
$R_2$ represents 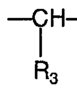, $—CH_2—O—CH_2$ or $C_2$-$C_6$-alkylene, and

$R_3$ represents H, $C_1$-$C_6$-alkyl or phenyl,
c) 0.5-15 % by weight of a non-ionic surface-active agent and
d) 0-8 % by weight of a cationic or anionic surface-active agent.

2. Formulations according to Claim 1, characterised in that they contain 0.2-15 % of the mixture.
3. Formulations according to Claim 1, characterised in that they contain 0.4 to 5 % of a mixture of

a) 80-90 % of a mineral oil having a boiling point of not less than 270 °C,
b) 2-6 % of an amide of Claim 1,
c) 4-10 % of a non-ionic surface-active agent, in particular a reaction product of an aliphatic alcohol, alkylphenol, fatty acid amide or a fatty acid having 8-18 carbon atoms with 3-10 mols of ethylene oxide, and
d) 0-3 % of a cationic surface-active agent of the formula

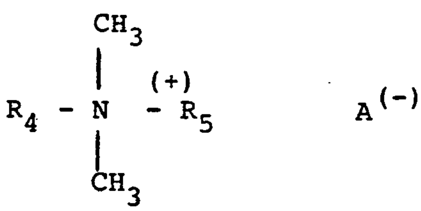

in which
$R_4$ represents a $C_{12}$-$C_{20}$-alkyl radical or a $C_{12}$-$C_{20}$-alkenyl radical,
$R_5$ represents the hydroxyethyl group or hydroxypropyl group and
$A^{(-)}$ represents an anion, in particular Cl, Br or $CH_3SO_4$.

4. Solid dyestuff formulations according to Claims 1-3, characterised in that the component b) denotes a methylene-bis-stearic acid amide.

5. Process for the preparation of low-dust and low-foam solid dyestuff formulations, characterised in that a mixture of a dyestuff solution or dyestuff dispersion and a mixture according to Claims 1 to 4 are spray-dried simultaneously.

6. Process according to Claim 5, characterised in that a mixture according to Claims 1 to 4 is continuously metered into the dyestuff solution or dyestuff dispersion, before spray-drying.

7. Process according to Claims 5 and 6, characterised in that a mixture according to Claims 1 to 4 is added in the form of an aqueous emulsion.

8. Process according to Claims 5 to 7, characterised in that a mixture according to Claims 1 to 4 is added in amounts of 0.2 to 15 % by weight, in particular 0.4 to 5 % by weight.

9. Process according to Claims 5 to 8, characterised in that a one-material nozzle is used as atomiser.

10. Process for the preparation of low-dust and low-foam solid dyestuff formulations, characterised in that the mixture according to Claims 1 to 4 is admixed in amounts of 0.2 to 15 % by weight, advantageously 0.4 to 5 % by weight, to the already dried dyestuff.

**Revendications**

1. Préparations solides de colorants organiques ainsi que d'azurants optiques, caractérisées en ce qu'elles contiennent un mélange

a) de 70 à 90 % en poids d'une huile minérale,
b) de 0,5 à 10 % en poids d'un amide de formule

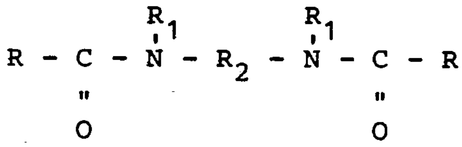

dans laquelle
R est un groupe alkyle ou alcényle en $C_{10}$ à $C_{22}$,
$R_1$ représente H, un groupe alkyle en $C_1$ à $C_4$, ou bien les deux groupes $R_1$ forment ensemble un pont 1,2-éthylène et
$R_2$ est un groupe $—CH—$, $—CH_2—O—CH_2—$ ou alkylène en $C_2$ à $C_6$,
|
$R_3$

$R_3$ représentant H, un groupe alkyle en $C_1$ à $C_6$ ou un groupe phényle,
c) 0,5 à 15 % en poids d'un agent tensio-actif non ionique et
d) de 0 à 8 % en poids d'un agent tensio-actif cationique ou anionique.

2. Préparations suivant la revendication 1, caractérisées en ce qu'elles contiennent 0,2 à 15 % du mélange.
3. Préparations suivant la revendication 1, caractérisées en ce qu'elles contiennent 0,4 à 5 % d'un mélange formé de

a) 80 à 90 % d'une huile minérale de point d'ébullition au moins égal à 270 °C,
b) 2 à 6 % d'un amide suivant la revendication 1,
c) 4 à 10 % d'un agent tensio-actif non ionique, notamment d'un produit de réaction d'un alcool aliphatique, d'un alkylphénol, d'un amide d'acide gras ou d'un acide gras contenant 8 à 18 atomes de carbone avec 3 à 10 moles d'oxyde d'éthylène et
d) 0 à 3 % d'un agent tensio-actif cationique de formule

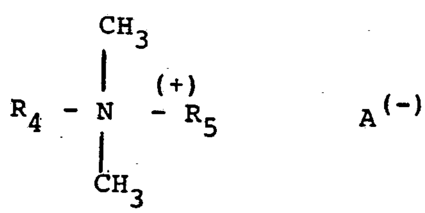

dans laquelle
$R_4$ est un reste alkyle ou alcényle en $C_{12}$ à $C_{20}$,
$R_5$ est un groupe hydroxyéthyle ou hydroxypropyle et
$A^{(-)}$ représente un anion, notamment Cl, Br ou $CH_3SO_4$.
4. Préparations tinctoriales solides suivant les revendications 1 à 3, caractérisées en ce que le composant b) est un amide d'acide méthylène-bis-stéarique.
5. Procédé de production de préparations tinctoriales solides sans poussières et sans mousse, caractérisé en ce qu'on sèche conjointement par pulvérisation un mélange formé d'une solution ou d'une dispersion de colorants et d'un mélange suivant les revendications 1 à 4.
6. Procédé suivant la revendication 5, caractérisé en ce que le mélange suivant les revendications 1 à 4 est ajouté continuellement à la solution ou dispersion de colorants avant le séchage par pulvérisation.
7. Procédé suivant les revendications 5 et 6, caractérisé en ce que le mélange suivant les revendications 1 à 4 est ajouté sous la forme d'une émulsion aqueuse.
8. Procédé suivant les revendications 5 à 7, caractérisé en ce que le mélange suivant les revendications 1 à 4 est ajouté en quantités de 0,2 à 15 % en poids, notamment de 0,4 à 5 % en poids.
9. Procédé suivant les revendications 5 à 8, caractérisé en ce qu'on utilise comme organe de pulvérisation une buse pour un seul constituant.
10. Procédé de production de préparations tinctoriales solides sans poussières et sans mousse, caractérisé en ce que le mélange suivant les revendications 1 à 4 est ajouté au colorant déjà séché en quantités de 0,2 à 15 % en poids, de préférence de 0,4 à 5 % en poids.